(19) Europäisches Patentamt
European Patent Office
Office européen des brevets

(11) **EP 1 612 082 A1**

(12) **EUROPÄISCHE PATENTANMELDUNG**

(43) Veröffentlichungstag:
**04.01.2006 Patentblatt 2006/01**

(51) Int Cl.:
**B60K 31/00** (2006.01)

(21) Anmeldenummer: **05104393.3**

(22) Anmeldetag: **24.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **12.06.2004 DE 102004028613**

(71) Anmelder: **ROBERT BOSCH GMBH**
**70442 Stuttgart (DE)**

(72) Erfinder: **Lehner, Philipp**
**75417 Muehlacker (DE)**

(54) **Spurwechselassistent für Kraftfahrzeuge**

(57) Spurwechselassistent für Kraftfahrzeuge (10), mit einer Einrichtung (12) zur Bestimmung eines Gefahrenwertes anhand von Ortungsdaten der von dem Spurwechsel betroffenen Fahrzeuge, dadurch gekennzeichnet, daß eine Erfassungseinrichtung (20, 22) für Umweltbedingungen vorhanden ist und daß der bestimmte Gefahrenwert auch von den erfaßten Umweltbedingungen, beispielsweise von der Umgebungshelligkeit oder der Regenmenge abhängig ist.

Fig. 1

EP 1 612 082 A1

**Beschreibung**

Stand der Technik

Die Erfindung betrifft einen Spurwechselassistenten für Kraftfahrzeuge, mit einer Einrichtung zur Bestimmung eines Gefahrenwertes anhand von Ortungsdaten der von dem Spurwechsel betroffenen Fahrzeuge.

Spurwechselvorgänge auf Autobahnen und mehrspurigen Schnellstraßen bergen ein hohes Unfallrisiko. Die Ursache liegt zumeist darin, daß der Fahrer eines Fahrzeugs bei einem Spurwechsel andere Verkehrsteilnehmer, die sich auf der Nachbarspur von hinten annähern oder sich im toten Winkel befinden, übersieht oder deren Abstand und/oder Geschwindigkeit falsch einschätzt.

Ein Spurwechselassistent unterstützt den Fahrer beim Wechsel der Fahrspur, z.B. bei Überhol- und Einschermanövern. Eine wesentlichen Funktion des Spurwechselassistenten besteht darin, den Fahrer über Fahrzeuge zu informieren bzw. ihn vor Fahrzeugen zu warnen, die sich schnell von hinten annähern oder sich im toten Winkel befinden. Dies trägt wesentlich zur Vermeidung von Kollisionsunfällen bei.

Zu dem Spurwechselassistenten gehört mindesten ein Ortungsgerät, z.B. ein Radar-, Lidar- oder Ultraschallsensor, der den rückwärtigen Bereich neben und hinter dem eigenen Fahrzeug überwacht und Informationen über die vom Spurwechsel betroffenen Fahrzeuge liefert. Die betroffenen Fahrzeuge sind insbesondere Fahrzeuge im toten Winkel sowie nachfolgende Fahrzeuge auf der Nebenspur, zumindest das unmittelbar nachfolgende Fahrzeug. Vorzugsweise werden auch Fahrzeuge berücksichtigt, die sich auf annähernd gleicher Höhe mit dem eigenen Fahrzeug befinden und somit zwar nicht im toten Winkel liegen aber dennoch vom Fahrer leicht übersehen werden könnten. Die relevanten Ortungsdaten sind, jedenfalls für nachfolgende Fahrzeuge, die Abstände dieser Fahrzeuge und deren zeitliche Ableitungen. Besonders relevant sind naturgemäß der Abstand und die Relativgeschwindigkeit des unmittelbar nachfolgenden Fahrzeugs. Wenn das Ortsgerät ein Radarsensor ist, können die Relativgeschwindigkeiten direkt gemessen werden. Für Fahrzeuge auf gleicher Höhe oder im toten Winkel ist die Kenntnis der Relativgeschwindigkeit im Allgmeinen entbehrlich.

Anhand der Ortungsdaten wird ein Gefahrenwert bestimmt, der das Risikopotential einer Kollision angibt. Dabei ist generell auch die Absolutgeschwindigkeit des eigenen Fahrzeugs zu berücksichtigen, da bei höheren Geschwindigkeiten größere Sicherheitsabstände einzuhalten sind. Der Gefahrenwert kann eine kontinuierliche Variable sein, beispielsweise mit einem Wertebereich zwischen 0 und 1, kann jedoch im einfachsten Fall auch eine Ja/Nein-Aussage sein, die angibt, ob ein gefahrloser Spurwechsel möglich ist oder nicht. Wenn der Fahrer etwa durch Setzen des Blinkers oder durch ein Lenkmanöver die A bsicht zu einem Spurwechsel zu erkennen gibt, erzeugt der Spurwechselassistent in Abhängigkeit von dem ermittelten Gefahrenwert ein Warnsignal, beispielsweise in Form eines akustischen Signals oder in der Form einer optischen Anzeige auf dem Armaturenbrett oder im linken Außenspiegel (in Ländern mit Rechtsverkehr). Im Fall eines mehrwertigen Gefahrenwertes wird das Warnsignal beispielsweise dann ausgegeben, wenn der Gefahrenwert einen bestimmten Schwellenwert überschreitet, oder das Warnsignal gibt unmittelbar den Gefahrenwert an, etwa durch variable Lautstärke des akustischen Signals oder in der Form einer Balkenanzeige. Wahlweise kann der Gefahrenwert auch dazu benutzt werden, daß der Spurwechselassistenz aktiv einen Spurwechsel vorschlägt, etwa durch Ausgabe eines Aufforderungssignals oder implizit durch Einleitung eines Beschleunigungsvorgangs, mit dem das Einfädeln in den Verkehr auf der Nebenspur vorbereitet wird. Die Spurwechselaufforderung kann dann außer von dem Gefahrenwert auch noch von anderen Kriterien abhängig sein. Wenn das Fahrzeug z.B. ein radargestütztes Abstandsregelsystem (ACC = Adaptive Cruise Control) aufweist, wäre ein geeignetes Kriterium etwa die Diskrepanz zwischen der vom Fahrer gewählten Wunschgeschwindigkeit und der durch die Gesch windigkeit des vorausfahrenden Fahrzeugs bestimmten Istgeschwindigkeit.

Beispiele für Spurwechselassistenten und die zugehörige Sensorik werden beschrieben in DE 40 05 444 A1, DE 35 00 152 A1, DE 296 20 357 U1, DE 43 13 568 C1, DE 195 26 452 C1, US 6 400 3 08 B1 und DE 199 21 449 C1. Die letztgenannte Druckschrift beschreibt ein System, bei dem auch Straßengeometriedaten ermittelt werden, um die Position des eigenen Fahrzeugs auf der Straße zu bestimmen und eine korrekte Lagezuordnung eines nachfolgenden Fahrzeugs relativ zur Straße zu ermöglichen.

Vorteile der Erfindung

Die Erfindung mit den in Anspruch 1 angegebenen Merkmalen bietet den Vorteil, daß bei der Bestimmung des Gefahrenwertes auch Umwelteinflüsse berücksichtigt werden, die sich günstig oder ungünstig auf die Möglichkeiten und Fähigkeiten anderer Verkehrsteilnehmer auswirken können, angemessen auf den Spurwechsel zu reagieren. Auf diese Weise wird die Verkehrssicherheit gesteigert und das Systemverhalten besser an das intuitive Fahrverhalten eines menschlichen Fahrers angepaßt. Dadurch reduziert sich auch die Wahrscheinlichkeit, daß sich andere Verkehrsteilnehmer durch den Spurwechsel behindert fühlen.

Vorteilhafte Ausgestaltungen ergeben sich aus den Unteransprüchen.

Relevante Umwelteinflüsse sind insbesondere solche, die sich auf die Sichtverhältnisse und den Straßenzustand beziehen. Beispielsweise ist es bei schlechten Sichtverhältnissen, etwa bei Dunkelheit, bei Nebel, bei Dämmerung oder bei trüber Witterung für einen menschlichen Fahrer schwier iger als bei hellem Tageslicht und klarer Sicht, Abstände und Geschwindigkeiten richtig einzuschätzen. Ebenso ist es unter diesen Bedingungen schwieriger, vorausschauend das Geschehen vor dem unmittelbar vorausfahrenden Fahrzeug im Auge zu behalten. Ein erfahrener menschlicher Fahrer reagiert deshalb auf diese Bedingungen mit einer Vergrößerung des Sicherheitsabstands. Der erfindungsgemäße Spurwechselassistent ermöglicht es insbesondere, dem Umstand Rechnung zu tragen, daß unter solchen Bedingungen der Fahrer des nachfolgenden Fahrzeugs einen größeren Sicherheitsabstand benötigt oder für wünschenswert hält, zumal nicht davon ausgegangen werden kann, daß auch der Fahrer des nachfolgenden Fahrzeugs ein radargestütztes Fahrerassistenzsystem zur Verfügung hat.

Ebenso ermöglicht es die Erfindung, bei ungünstigem Straßenzustand, etwa bei regennasser Fahrbahn oder Glatteis einen größeren Sicherheitsabstand zum Folgefahrzeug einzuhalten. Bei Regen kann durch Vergrößerung des Sicherheitsabstands auch dem Umstand Rechnung getragen werden, daß, je nach Fahrgeschwindigkeit, durch den von der Fahrbahn aufgewirbelten Wassernebel die Sicht für den Nachfolgeverkehr beeinträchtigt wird.

Zur Erfassung der Umweltbedingungen ist eine Erfassungseinrichtung mit einem oder mehrere n Sensoren vorgesehen, beispielsweise einem Umgebungslichtsensor, einem Regenmelder, wie er z.B. bereits zur Steuerung des Scheibenwichers bekannt ist, und dergleichen. Ebenso sind spezielle Sensoren oder Erfassungssysteme für Glatteis und/oder für Nebel denkbar. Falls zur Ortung von nachfolgenden Fahrzeugen ein Lidar-Sensor eingesetzt wird, kann auch die durchschnittliche Dämpfung der empfangenen Reflexionssignale im Verhältnis zum gemessenen Abstand als Hinweis auf Nebel oder sonstige Sichtbeeintächtigungen ausgewertet werden. In Ermangelung spezieller Sensoren für die Licht - und Sichtverhältnisse ist es auch möglich, den Zustand der Beleuchtungsanlage des Fahrzeugs auszuwerten, etwa den Einschaltzustand des Fahrlichts, der Nebelscheinwerfer oder einer Nebelschlußleuchte.

Obgleich der Begriff "Umweltbedingungen" in dieser Anmeldung im Plural verwendet wird, schließt die Erfindung auch den Fall ein, daß nur eine einzige Bedingung erfaßt und ausgewertet wird.

Ein Ausführungsbeispiel der Erfindung ist in den Zeichnungen dargestellt und in der nachfolgenden Beschreibung näher erläutert.

Es zeigen:

Figur 1        ein Blockdiagramm eines erfindungsgemäßen Spurwechselassistenten in einem schematisch dargestellten Fahrzeug; und

Figuren 2 und 3    Kennfeld-Diagramme zur Erläuterung der Funktionsweise des Spurwechselassistenten.

Beschreibung des Ausführungsbeispiels

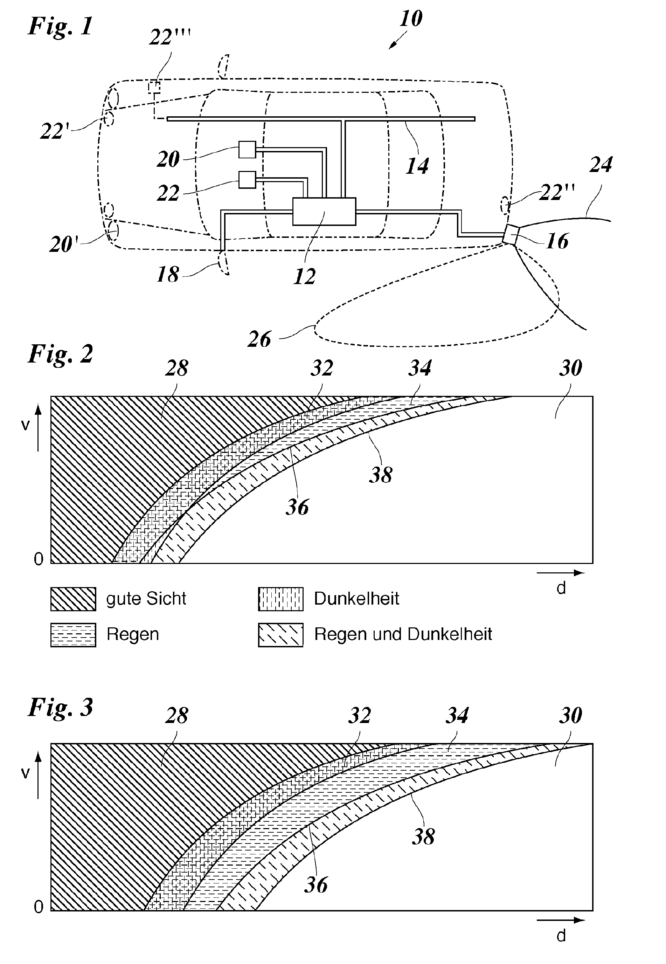

Figur 1 zeigt schematisch einen Grundriß eines Kraftfahrzeugs 10, das mit einem Spurwechselassistenten ausgerüstet ist. Kernstück des Spurwechselassistenten is t eine elektronische Datenverarbeitungseinheit 12, die über einen Fahrzeug -CAN-Bus 14 mit anderen, nicht näher gezeigten elektronischen Steuerungskomponenten des Fahrzeugs kommuniziert und die weiterhin mit einem Ortungsgerät 16, mehreren Sensoren einer Erfassungseinrichtung für Umweltbedingungen sowie mit einer in den linken Außenspiegel integrierten optischen Anzeigeeinheit 18 in Verbindung steht.

Bei dem Ortungsgerät 16 handelt es sich um einen Radarsensor, der so am Fahrzeug angebracht ist, daß er den Raum hinter und links neben dem Fahrzeug überwacht, um sich von hinten auf der linken Spur annähernde Fahrzeuge sowie Fahrzeuge im toten Winkel zu orten. Zumindest für die sich annähernden Fahrzeuge werden die Abstände und Relativgeschwindigkeiten gemessen . In Abhängigkeit von den Ortungsdaten des Ortungsgerätes 16 und in Abhängigkeit von der Absolutgeschwindigkeit des Fahrzeugs 10, die über den Fahrzeug-CAN-Bus 14 gemeldet wird, berechnet die Datenverarbeitungseinheit 12 einen Gefahrenwert, der das Gefahrenpotential für eine Kollision angibt, wenn der Fahrer des Fahrzeugs 10 auf die linke Nebenspur wechselt.

Wenn der Fahrer etwa durch Setzen des linken Fahrtrichtungsanzeigers zu erkennen gibt, daß er einen Spurwechsel beabsichtigt, und wenn in diesem Augenb lick der Gefahrenwert oberhalb eines bestimmten Schwellenwertes liegt, wird über die Anzeigeeinheit 18 ein Warnsignal ausgegeben. Wahlweise kann auch unmittelbar der Gefahrenwert ausgegeben werden, etwa in der Form eines Balkendiagramms, so daß der Fahrer die Höhe des Gefahrenpotentials selbst einschätzen kann. Ein sehr hohes und auf jeden Fall zu vermeidendes Gefahrenpotential kann dabei z.B. durch einen Farbumschlag des Balkens nach rot kenntlich gemacht werden. In einer modifizierten Ausführungsform kann die Anzeige auch ständig, unabhängig von einem erkennbaren Spurwechselwunsch, aktiv sein.

Die Erfassungseinrichtung für Umweltbedingungen umfaßt im gezeigten Beispiel einen Umgebungslichtsensor 20 und einen Regenmelder 22, der, wie an sich bekannt ist, die auf die Windschutzscheibe des Fahrzeugs auftreffende Niederschlagsmenge quantitativ erfaßt und der zugleich auch zur Steuerung des Scheibenwischers dienen kann. Die Datenverarbeitungseinheit 12 ist so programmiert, daß sie den Gefahrenwert in Abhängigke it von den vom Umgebungslichtsensor 20 und vom Regenmelder 22 erfaßten Daten nach einem vorgegebenen Algorithmus erhöht oder verringert. Allgemein ist somit der Gefahrenwert g eine Funktion der Ortungsdaten $x_i$, der Absolutgeschwindigkeit V des Fahrzeugs 10 und der Umgebungsbedingungen $u_j$:

$$g = f(x_i, V, u_j).$$

Dabei umfassen die Ortungsdaten $x_i$ zumindest den Abstand d und die Relativgeschwindigkeit vr des auf der Nebenspur unmittelbar nachfolgenden Fahrzeugs, und die Umweltbedingungen $u_j$ (j = 1,2) sind im gezeigten Beispiel die erfaßte Umgebungshelligkeit und die Regenmenge. In einer modifizierten Ausführungsform können die Ortungsdaten $x_i$ auch die Abstände und Relativgeschwindigkeiten weiterer nachfolgender Fahrzeuge umfassen, die ebenfalls für die Beurteilung des Gefahrenpotentials relevant sein können. Auch eine Berücksichtgung von Relativbeschleunigungen ist möglich.

Im gezeigten Beispiel hat das Ortungsgerät 16 eine schräg nach hinten gerichtete Hauptkeule 24 zur Messung der Abstände und Relativgeschwindigkeiten der sich annähernden Fahrzeuge und eine Nebenkeule 26 zur Ortung von Fahrzeugen im toten Winkel. Wenn ein Fahrzeug im toten Winkel geortet wird, so wird der Gefahrenwert auf den maximal möglichen Wert gesetzt, ohne daß es noch auf die Relativgeschwindigkeit des georteten Fahrzeugs oder auf die Umweltbedingungen ankommt. Zur Erläuterung der Erfindung sind deshalb nur die Daten aus der Hauptkeule 24 von Interesse.

Bei dem vom Umgebungslichtsensor 20 gelieferten Signal handelt es sich vorzugsweise um ein mehrwertiges Signal, das die Umgebungslichtmenge quantitativ angibt, so daß zwischen Sonnenschein, trüber Witterung, Dämmerung und Dunkelheit unterschieden werden kann. Der Gefahrenwert g wird bei Sonnenschein nicht und bei trüber Witterung nur leicht erhöht, während er bei Dämmerung und Dunkelheit deutlich erhöht wird.

Auch der Regenmelder 22 liefert ein mehrwertiges Signal. Je größer die Regenmenge ist, desto mehr wird der Gefahrenwert erhöht.

In einer zweckmäßigen Ausführungsform ist die Funktion, die den Gefahrenwert g bestimmt, eine Verkettung mehrerer Teilfunktionen, von denen die zuerst auszuführende Teilfunktion nur von den Ortungsdaten und den fahrdynamischen Daten des Fahrzeugs 10 abhängig ist, beispielsweise eine Kettenfunktion der Form:

$$g = f_1(u_j, f_0(x_i, V))$$

oder

$$g = f_2(u_2, f_1(u_1, f_0(x_i, V)))$$

Die Funktion $f_0$ gibt dann den Gefahrenwert ohne Berücksichtigung der Umweltbedingungen an, wie er beispielsweise auch in einem herkömmlichen Spurwechselassistenten berechnet wird. Anhand der Umweltbedingungen wird das Ergebnis der Funktion $f_0$ dann in einem oder mehreren Schritten modifiziert. Insbesondere die Modifikation in mehreren Schritten erlaubt eine einfache Erweiterung zur Erfassung zusätzlicher Umweltbedingungen, beispielsweise anhand der Signale eines Sichtweitensensors, eine Glatteismelders und dergleichen, wobei die Reihenfolge, in der die einzelnen Umweltbedingungen berücksichtigt werden, nach Zweckmäßigkeitsgesichtspunkten gewählt werden kann.

In einer vereinfachten Ausführungsform, wenn kei n Umgebungslichtsensor 20 und kein Regenmelder 22 vorhanden ist, kann die Erfassungseinrichtung für die Umweltbedingungen einfach in einer Schaltung bestehen, die den Einschaltzustand des Fahrlichts 20' des Fahrzeugs 10 angibt. Unter der Annahme, daß das Fahrlicht nur bei Dunkelheit eingeschaltet wird, erhält man so indirekt eine Angabe über die Umgebungshelligkeit in der Form einer Ja/Nein-Aussage. Für die Bestimmung des Gefahrenwertes g können dann je nach Einschaltzustand des Fahrlichts zwei unterschiedliche Funktionen gewählt werden:

$$g = g_1(x_i, V) \text{ bei ausgeschaltetem Licht}$$

$$g = g_2(x_i, V) \text{ bei eingeschaltem Licht}$$

Die Funktion $g_2$ sieht dann generell größere Sicherheitsabstände vor, entsprechend den schlechteren Sichtverhältnissen bei Dunkelheit.

Auf analoge Weise können auch andere zweiwertige Signale berücksichtigt werden, etwa der Einschaltzustand eines Nebelscheinwerfers 22' und/oder einer Nebelschlußleuchte 22'' oder das Signal eines Glatteismelders 22'''. Auch eine Kombination mit den oben beschriebenen Funktionen zur Auswertung der Signale des Umgebungslichtsensors 20 und/oder des Regenmelders 22 ist möglich.

Figuren 2 und 3 zeigen als einfaches Beispiel zwei Ausschnitte eines dreidimensionalen Kennfelds, das die Abhängigkeit des Gefahrenwertes g vom Abstand d des unmittelbar nachfolgenden Fahrzeugs auf der Nebenspur, der Relativgeschwindigkeit vr dieses Fahrzeugs und der Absolutgeschwindigkeit V des eigenen Fahrzeugs 10 angibt. Figuren 2 und 3 zeigen zweidimensionale d/vr-Kennfelder für unterschiedliche Absolutgeschwindigkeiten V des Fahrzeugs 10. Weiterhin wird hier der Einfachheit halber angenommen, daß der Gefahrenwert g eine binäre Größe ist, also nur entweder den Wert "1" (Spurwechsel nicht möglich) oder den Wert "0" (Spurwechsel möglich) annimmt. Das dunkle, schräg schraffierte Feld 28 in Figur 2 gibt die Kombinationen von Abstand und Relativgeschwindigkeit an, bei denen der Abstand d so klein und/oder die Relativgeschwindigkeit v so groß ist, daß ein Spurwechsel nicht möglich ist (g = 1), und zw ar für den Fall, daß der Umgebungslichtsensor 20 optimale Sicht meldet und es nicht regnet. Der Abstand d, bei dem ein Spurwechsel noch möglich ist, nimmt von einem bestimmten Mindestabstand bei der Relativgeschwindigkeit 0 mit steigender Relativgeschwindi gkeit (Annäherung des nachfolgenden Fahrzeugs) progressiv zu, damit dem nachfolgenden Fahrzeug ein ausreichender Verzögerungsweg bleibt. Das weiße Feld 30 in Figur 2 repräsentiert den Bereich, in dem ein Spurwechsel auf jeden Fall möglich ist (g = 0). Bei Dunkelheit, wenn der Umgebungslichtsensor 20 eine kleine Umgebungslichtmenge feststellt, vergrößert sich das Feld 28 um die senkrecht schraffierte Fläche 32. Im gezeigten Beispiel entspricht dies einer Vergrößerung des Sicherheitsabstands um einen von der Relativgeschwindigkeit vr unabhängigen Wert.

Wenn dagegen der Umgebungslichtsensor 20 gute Sichtverhältnisse meldet, aber der Regenmelder 22 eine hohe Niederschlagsmenge anzeigt, vergrößert sich das Feld 28 um die waagerecht schraffierte Fläche 34. Hier ist nicht nur der Mindestabstand bei der Relativgeschwindigkeit vr = 0 vergrößert, sondern der Mindestabstand nimmt auch mit zunehmender Relativgeschwindigkeit schneller zu, da auf regennasser Fahrbahn ein größerer Verzögerungsweg für das nachfolgende Fahrz eug einkalkuliert werden muß. Die Grenzlinie zwischen den Feldern 28 und 30, bei der sich der Gefahrenwert g von 0 auf 1 ändert, ist dann durch die Kurve 36 in Figur 2 gegeben. Unter ungünstigsten Bedingungen, bei Dunkelheit und Regen, wird die Kurve 36 no ch einmal um einen konstanten Betrag in Richtung größerer d verschoben, so daß die Grenzlinie dann durch die Kurve 38 gebildet wird.

Figur 3 zeigt das gleiche für eine größere Absolutgeschwindigkeit V des Fahrzeugs 10. Hier werden insbesondere bei Regen (Kurven 36 und 38) die Mindestabstände stärker erhöht, da bei hoher Geschwindigkeit durch den von der Straße aufgewirbelten Wassernebel die Sicht für den Fahrer des nachfolgenden Fahrzeugs weiter verschlechtert wird. Entsprechend der größeren Fahrgeschwindigkeit ist auch der Mindestabstand bei Relativgeschwindigkeit 0 größer als in Figur 2.

In Figuren 2 und 3 hat das Kennfeld nur die Dimensionen d, vr und V, da die Signale des Umgebungslichtsensors 20 und des Regenmelders 22 hier als zweiwertige Signale betr achtet werden. Wenn es sich bei diesen Signalen um mehrwertige Signale handelt, erhält das Kennfeld für jedes mehrwertige Signal eine zusätzliche Dimension. Weitere Dimensionen für Abstände und Relativgeschwindigkeiten kommen hinzu, wenn weitere nachfolgen de Fahrzeuge berücksichtigt werden. Denkbar ist auch die Berücksichtigung weiterer fahrdynamischer Zustände des eigenen Fahrzeugs 10, beispielsweise eine Berücksichtigung der Querbeschleunigung.

**Patentansprüche**

1. Spurwechselassistent für Kraftfahrzeuge (10), mit einer Einrichtung (12) zur Bestimmung eines Gefahrenwertes anhand von Ortungsdaten der von dem Spurwechsel betroffenen Fahrzeuge, **dadurch gekennzeichnet, daß** eine Erfassungseinrichtung (20, 22) für Umweltbedingungen vorhanden ist und daß der bestimmte Gefahrenwert auch von den erfaßten Umweltbedingungen abhängig ist.

2. Spurwechselassistent nach Anspruch 1, **dadurch gekennzeichnet, daß** der Gefahrenwert von den von der Erfassungseinrichtung (20) erfaßten Sichtverhältnissen abhängig ist.

3. Spurwechselassistent nach Anspruch 2, **dadurch gekennzeichnet, daß** die Erfassungseinrichtung einen Umgebungslichtsensor (20) aufweist.

4. Spurwechselassistent nach Anspruch 2 oder 3, **dadurch gekennzeichnet, daß** die Erfassungseinrichtung eine Schaltung zur Erfassung des Einschaltzustands der Beleuchtungsanlage (20', 22', 22'') des Kraftfahrzeugs aufweist.

5. Spurwechselassistent nach Anspruch 4, **dadurch gekennzeichnet, daß** die Erfassungseinrichtung dazu ausgebildet ist, den Einschaltzustand von Nebelscheinwerfern (22') und/oder einer Nebelschlußleuchte (22'') des Fahrzeugs zu erfassen.

6. Spurwechselassistent nach einem der vorstehenden Ansprüche, **dadurch gekennzeichnet, daß** die Erfassungseinrichtung (22) den Fahrbahnzustand erfaßt.

7. Spurwechselassistent nach Anspruch 6, **dadurch gekennzeichnet, daß** die Erfassungseinrichtung einen Regenmelder (22) aufweist.

8. Spurwechselassistent nach Anspruch 6 oder 7, **dadurch gekennzeichnet, daß** die Erfassungseinrichtung ei nen Glatteismelder (22''') aufweist.

*Fig. 1*

*Fig. 2*

| | | |
|---|---|---|
| ▨ gute Sicht | | ▨ Dunkelheit |
| ▨ Regen | | ▨ Regen und Dunkelheit |

*Fig. 3*

**Europäisches Patentamt**

# EUROPÄISCHER RECHERCHENBERICHT

Nummer der Anmeldung

EP 05 10 4393

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br><br>Y | EP 0 443 185 A (BAYERISCHE MOTOREN WERKE AKTIENGESELLSCHAFT)<br>28. August 1991 (1991-08-28)<br>* Zusammenfassung; Abbildungen *<br>* Seite 2, Zeile 36 - Seite 3, Zeile 24 *<br>----- | 1,2,6<br><br><br>3-5,7,8 | B60K31/00 |
| A | EP 1 067 499 A (RENAULT)<br>10. Januar 2001 (2001-01-10)<br>* Zusammenfassung; Abbildungen *<br>----- | 1 | |
| Y | DE 38 10 840 C1<br>(MESSERSCHMITT-BOELKOW-BLOHM GMBH, 8012 OTTOBRUNN, DE)<br>9. November 1989 (1989-11-09)<br>* Zusammenfassung; Abbildung 1 *<br>* Spalte 1, Zeile 53 - Zeile 56 *<br>* Spalte 2, Zeile 33 *<br>----- | 3-5 | |
| Y | DE 36 37 165 A1 (ASHAUER,RAINER)<br>5. Mai 1988 (1988-05-05)<br>* Zusammenfassung *<br>* Spalte 1, Zeile 22 - Zeile 24 *<br>* Anspruch 16 *<br>----- | 7,8 | RECHERCHIERTE SACHGEBIETE (Int.Cl.7)<br><br>B60K |

Der vorliegende Recherchenbericht wurde für alle Patentansprüche erstellt

| Recherchenort | Abschlußdatum der Recherche | Prüfer |
|---|---|---|
| Den Haag | 24. August 2005 | Wagner, H |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 10 4393

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 0443185 | A | 28-08-1991 | DE | 4005444 A1 | 22-08-1991 |
| | | | DE | 59008417 D1 | 16-03-1995 |
| | | | EP | 0443185 A2 | 28-08-1991 |
| EP 1067499 | A | 10-01-2001 | FR | 2795852 A1 | 05-01-2001 |
| | | | EP | 1067499 A1 | 10-01-2001 |
| DE 3810840 | C1 | 09-11-1989 | WO | 8909015 A1 | 05-10-1989 |
| | | | EP | 0374204 A1 | 27-06-1990 |
| DE 3637165 | A1 | 05-05-1988 | KEINE | | |

EPO FORM P0461

Für nähere Einzelheiten zu diesem Anhang : siehe Amtsblatt des Europäischen Patentamts, Nr.12/82